# EUROPEAN PATENT APPLICATION

(11) **EP 3 124 754 A1**
(43) Date of publication of application: **01.02.2017**
(21) Application number: 16179870.7
(22) Date of filing: 18.07.2016
(51) Int. Cl.: F01D 11/00

(54) **NEAR FLOW PATH SEAL FOR A TURBOMACHINE**

(30) Priority: 29.07.2015 US 201514812568
(71) Applicant: General Electric Company, Schenectady, NY 12345 (US)
(72) Inventor: PARK, Junyoung, Greenville, SC South Carolina 29615 (US); TAYLOR, Zachary James, Greenville, SC South Carolina 29615 (US); UCOK, Ibrahim, Greenville, 29615 (US)
(74) Representative: Pöpper, Evamaria

(57) **Abstract**

A near flow path seal member (30) includes a seal body having a first end portion (42) extending to a second end portion (44) having a dovetail member (48). The first end portion (42) includes a third end (54) and a fourth end (56) having a surface (58) extending therebetween and facing away from the dovetail member (48), the surface (58) having a longitudinal axis extending between the third (54) and the fourth end (56). A recess (62) formed in the surface (58) has a geometry to receive a seal element assembly (64) having a base (66) extending to at least one seal element (68). The seal element assembly (64) is selectively installable or removable from the recess (62)

## Description

### FIELD OF THE INVENTION

The present invention relates generally to the art of turbomachines, and, more specifically, to a near flow path seal for a turbomachine and method of repairing the near flow path seal.

### BACKGROUND OF THE INVENTION

Turbomachines include a casing that houses a turbine. The turbine includes a plurality of blades or buckets that extend along a gas path. The buckets are supported by a number of turbine rotors that define a plurality of turbine stages. A combustor assembly generates hot gases that are passed through a transition piece toward the plurality of turbine stages. In addition to hot gases from the combustor assembly, gases at a lower temperature flow from a compressor toward a wheelspace of the turbine. The lower temperature gases provide cooling for the rotors as well as other internal components of the turbine. In order to prevent hot gases from entering the wheelspace, the turbine includes near flow path seals that are arranged between adjacent rotors. The near flow path seals are configured to fit closely adjacent the rotors or buckets to reduce leakage from the gas path into the wheelspace.

Near flow path seals typically include seal elements, also referred to as teeth, that are in rotational contact with a stator positioned between adjacent buckets. Conventionally, the stator includes a honeycomb region typically composed of a nickel alloy, which is in rotational contact with seal elements of the near flow path seals, which are also typically composed of a nickel alloy. The chemical affinity between seal elements and honeycomb enables galling to take place and results in cracks propagating from tips of the seal elements in premature failures.

In addition, conventional near flow path seals and seal elements are typically molded as a single part. Due to the elongated and typically thin profiles of the seal elements, the molding temperature is further elevated to ensure the material properly flows into and fills the portion of the seal elements. The resulting grain structure of the dovetail section may be enlarged, which can adversely affect material properties, such as producing reduced fatigue properties.

### SUMMARY OF THE INVENTION

The present invention is directed to a near flow path seal member for a turbomachine including a seal body having a first end portion extending to a second end portion having a dovetail member. The first end portion includes a third end and a fourth end having a surface extending therebetween and facing away from the dovetail member. The surface having a longitudinal axis extends between the third end and the fourth end. A recess formed in the surface has a geometry to receive a seal element assembly having a base extending to at least one seal element. The seal element assembly is selectively installable or removable from the recess.

The present invention is also directed to a method of repairing a near flow path seal member in an installed position of a turbomachine, including providing a seal body having a first end portion extending to a second end portion having a dovetail member. The first end portion includes a third end and a fourth end defining a surface extending therebetween and facing away from the dovetail member. The surface has a longitudinal axis extending between the third end and the fourth end. A recess formed in the surface has a geometry to receive a seal element assembly having a base extending to at least one seal element. The seal element assembly has been previously installed. The method further includes removing the seal element assembly and installing another seal element assembly.

Other features and advantages of the present invention will be apparent from the following more detailed description of the preferred embodiment, taken in conjunction with the accompanying drawings which illustrate, by way of example, the principles of the invention.

### BRIEF DESCRIPTION OF THE DRAWINGS

FIG. 1 is a schematic diagram of a turbomachine including a turbine portion having a near flow path seal member in accordance with an exemplary embodiment.
FIG. 2 is a partial cross-sectional side view of the turbine portion of FIG. 1 including an exemplary near flow path seal member arranged between turbine stages.
FIG. 3 is an enlarged partial side elevation view of an exemplary near flow path seal member.
FIG. 4 is an enlarged partial side elevation view of an exemplary near flow path seal member.
FIG. 5 is an enlarged partial side elevation view of an exemplary near flow path seal member.
FIG. 6 is a flow chart illustrating a method of preparing a near flow path seal member in and installed position of a turbo machine.

### DETAILED DESCRIPTION OF THE INVENTION

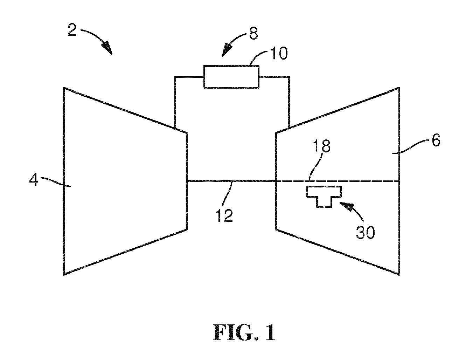

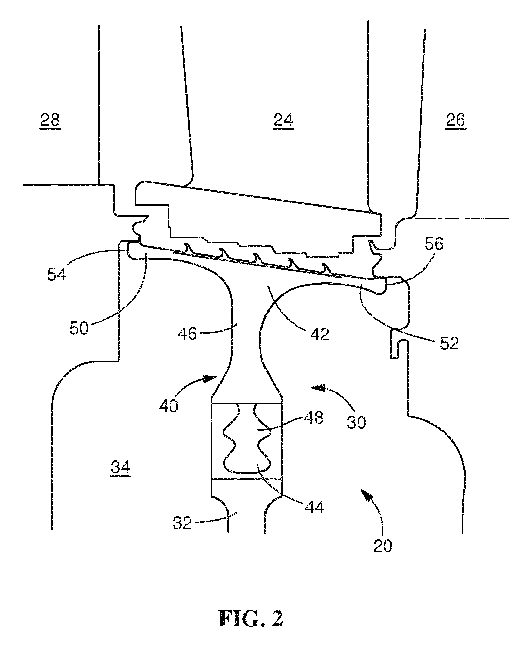

With reference to FIGS. 1 and 2, a turbomachine constructed in accordance with an exemplary embodiment is indicated generally at 2. Turbomachine 2 includes a compressor portion 4 operatively connected to a turbine portion 6. A combustor assembly 8 is fluidly connected to compressor portion 4 and turbine portion 6. Combustor assembly 8 is formed from a plurality of circumferentially spaced combustors, one of which is indicated at 10. Of course, it should be understood that combustor assembly 8 could include other arrangements of combustors. Compressor portion 4 is also linked to turbine portion 6 through a common compressor/turbine shaft 12. Combustor assembly 8 delivers products of combustion through a transition piece (not shown) to a gas path 18 in turbine portion 6. The products of combustion expand through turbine portion 6, for example, power a generator, to a pump, an aircraft or the like.

In the exemplary embodiment shown, turbine portion 6 includes a number of stages, one of which is shown at 20. Of course, it should be understood that the number of stages in turbine portion 6 could vary. Stage 20 includes a plurality of stators or nozzles, one of which is indicated at 24, and a plurality of buckets or blades, one of which is indicated at 26, mounted to a rotor wheel (not shown). In the exemplary embodiment shown, another plurality of blades or buckets, one of which is indicated at 28 is arranged upstream of nozzle 24. Buckets 28 form part of an upstream stage in turbine portion 6. Turbomachine 2 is also shown to include a plurality of near flow path seal members, one of which is indicated at 30 arranged between buckets 26 and 28 and below nozzle 24. Near flow path seal members 30 are mounted to shaft 12 through a seal member rotor 32. Near flow path seal members 30 are configured to prevent an exchange of gases between gas path 18 and a wheelspace 34 of turbomachine 2. At this point it should be understood that turbomachine 2 includes additional near flow path seal members (not shown) arranged between adjacent stages (also not shown) of turbine portion 6.

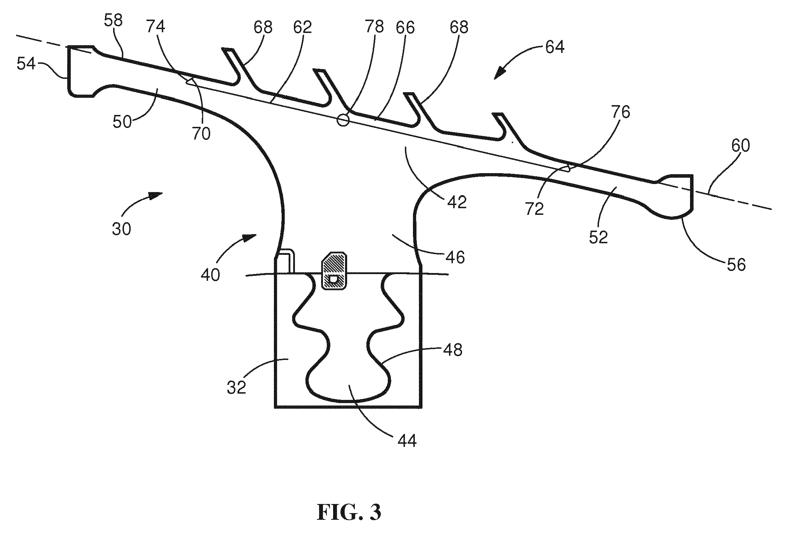

Reference will now be made to FIG. 3 in describing near flow path seal member 30 in accordance with an exemplary embodiment. Near flow path seal member 30 includes a body or seal body 40, including a first end portion 42 that extends to a second end portion 44 through a neck or intermediate portion 46. Second end portion 44 includes a dove tail member 48. Dove tail member 48 provides an interface between near flow path seal member 30 and seal member rotor 32.

FIG. 3 shows first end portion 42 of near flow path seal member 30 includes a first arm member 50 and an opposed second arm member 52 that are each cantilevered from first end portion 42 of seal body 40. First arm member 50 extends to a third end 54 and second arm member 52 extends to a trailing or fourth end 56. First end portion 42 has a surface 58 extending between third end 54 and fourth end 56 and facing away from dove tail member 48. Surface 58 has a longitudinal axis 60 extending between third end 54 and fourth end 56. A recess 62 is formed in surface 58 having a geometry to receive a seal element assembly 64 having a base 66 extending to at least one seal element 68. As will be discussed in further detail below, seal element assembly 64 is selectively installable or removable from recess 62. Seal element 68 may have a thickness of between about 0.07 inch and about 2.50 inch, between about 0.07 inch and about 1.5 inch, between about 0.1 inch and about 0.75 inch, between about 0.1 inch and about 0.50 inch, about 0.1 inch, or any suitable range or sub-range thereof. As a result of seal element assembly 64 and seal body 40 being separately manufactured, when seal body 40 is formed by molding, a lower molding temperature can be utilized, which may result in smaller grain structure, thereby at least improving material fatigue properties. Further, as a result of seal element assembly 64 being separately manufactured, seal element assembly 64 can be manufactured by a machining process, such as with lathes, mills, routers, grinders or other suitable machining process, reducing the cost associated with manufacturing a near flow path seal member.

In one embodiment, seal element assembly 64 and seal body 40 may be composed of different materials. For example, in one embodiment, seal element assembly 64 is composed of the group consisting of cobalt-base alloys, such as L-605, HS-188, FSX-414, nickel-base alloys such as R108, GTD-262, GTD-141+, GTD-141, GTD-111, Rene N2, IN-718, IN-725, IN-706, IN-901, IN-925, Hast-X, IN-625, stainless steels, such as 3XX series and 4XX series may be utilized depending on the ambient temperature in the turbine, ceramic matrix composites ("CMCs"), such as SiC fiber reinforced SiC composites and Alumina fiber reinforced oxide ceramic composites, coating materials overlying the seal element assembly, such as CM-64, Stellite-6, T-800, alumina, silicon carbide, boron nitride and capable of preventing galling when placed in contact with the seal body, or combinations thereof.

In one embodiment, seal body 40 is composed of the group consisting of superalloys, including cobalt-base alloys, such as L-605, HS-188, FSX-414, nickel-base alloys such as R108, GTD-262, GTD-141+, GTD-141, GTD-111, Rene N2, IN-718, IN-725, IN-706, IN-901, IN-925, Hast-X, IN-625, stainless steels, such as 3XX series and 4XX series may be utilized depending on the ambient temperature in the turbine, ceramic matrix composites ("CMCs"), such as SiC fiber reinforced SiC composites and Alumina fiber reinforced oxide ceramic composites, coating materials, such as Stellite-6, LOB1800G, Alumazite, Alumina, Silicon Carbide and Boron Nitride overlying recess 62 and capable of preventing galling and fretting when placed in contact with base 66 of seal element assembly 64, or combinations thereof.

It is to be understood that as a result of seal element assembly 64 being separately manufactured, material selection can be increased to include non-weld-repairable alloys, such as Rene'-108 (MAR M-247 or CM-247), Rene'-142, Rene'-N2, Rene'-N6, Rene'-195, GTD-444, GTD-111, PWA-1480, CMSX-4 that may have greater than about 30 percent by volume of gamma prime particles in their microstructure.

In one embodiment, the geometry of recess 62 is a slot having opposed ends 70, 72 having mating features permitting a slidable engagement/disengagement with base 66 of seal element assembly 64. For example, in one embodiment, ends 70, 72 of recess 62 define mating features such as ends 70, 72 being inwardly directed toward each other to permit slidable engagement with corresponding ends 74, 76 of base 66 of seal element assembly 64. In one embodiment, recess 62 defines mating features such as ends 70, 72 being serrated to permit slidable engagement with corresponding ends 74, 76 of base 66 of seal element assembly 64. It is to be understood that other mating features permitting slidable engagement/disengagement between corresponding ends 74, 76 of base 66 of seal element assembly 64 and ends 70, 72 of recess 62 may be used. In one embodiment, a direction of slidable engagement/disengagement is substantially normal to longitudinal axis 60.

It is to be understood that the term "mating features" is intended to include any portion along surface 58 of first end portion 42 in contact with base 66 of seal element assembly 64.

As further shown in FIG. 3, slidable engagement includes deforming a portion of the mating features, as indicated by deformed region 78, in at least one of recess 62 and base 66 of seal element assembly 64 subsequent to installing seal element assembly 64.

It is to be understood that slidable disengagement includes removal of deformed portion 78 of the mating features formed in at least one of recess 62 and base 66 of seal element assembly 64 subsequent to disengaging seal element assembly 64 and base 66 of seal element assembly 64 subsequent to disengaging seal element assembly 64.

In one embodiment, removal of deformed portion 78 is achieved by drilling, grinding or other suitable operation usable to remove material from one or more of seal element assembly 64 and seal body 40.

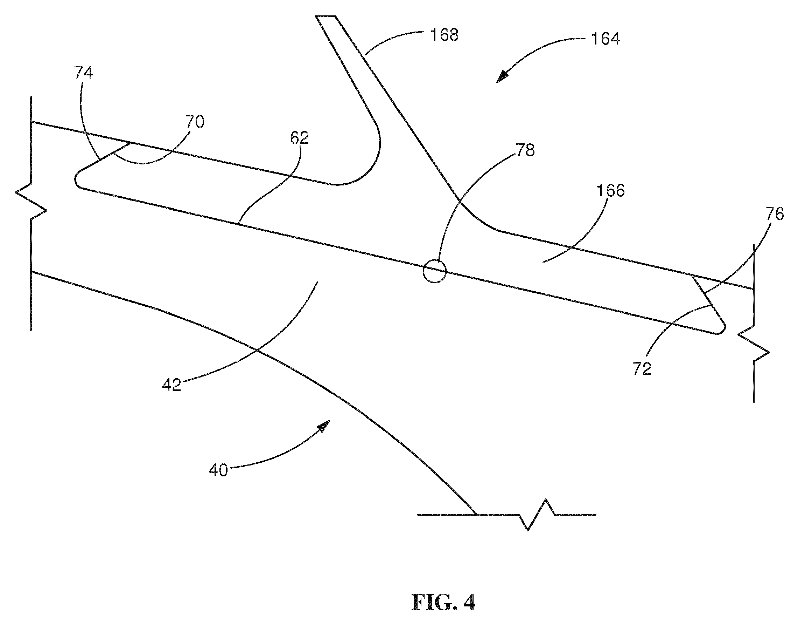

FIG. 4 shows an exemplary embodiment of seal element assembly 164 having a base 166 and one seal element 168, similar to seal element assembly 64.

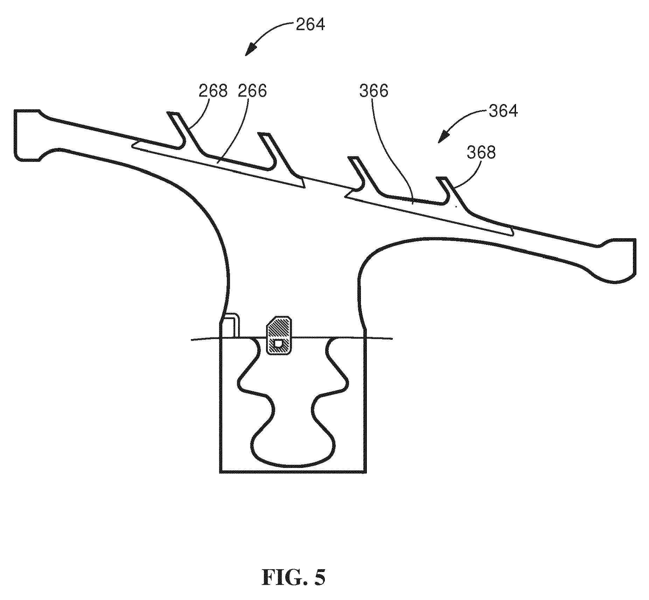

FIG. 5 shows the exemplary embodiment of seal element assembly 264 having a base 266 and a pair of seal elements 268, similar to seal element assembly 64.

FIG. 5 shows the exemplary embodiment of seal element assembly 364 having a base 366 and a pair of seal elements 368, similar to seal element assembly 64. It is to be understood, such as shown in FIG. 5, that more than one seal element assembly (e.g., 264 and 364) may be used with nearflow path seal members.

It is to be understood that the seal element assembly may include one or more seal elements.

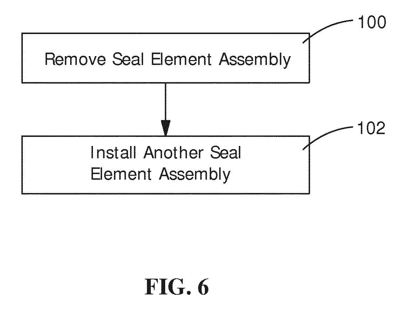

FIG. 6 is a flow chart that illustrates a method of repairing a near flow path seal member in an installed position of a turbomachine, although other methods may be used. For purposes herein, the terms "a", and "an" may used interchangeably with "at least one" or a term immediately followed by the suffix "(s)". The initial step 100 of the process typically includes removing seal element assembly 64 (FIG. 3). Step 100 of removing seal element assembly 64 includes removing deformed portion 78 from mating surfaces formed in at least one of recess 62 (FIG. 3) and base 66 of seal element assembly 64 (FIG. 3), such as by drilling, grinding or other suitable material removal process. Step 100 further includes removing seal element assembly 64 (FIG. 1) by application of sufficient force to seal element assembly 64 to slidably move seat element assembly 64 relative to recess 62. In one embodiment, the direction of slidable movement is substantially normal to longitudinal axis 60 (FIG. 3). In one embodiment, removal of seal element assembly 64 is achieved without removing near flow path seal member 30 from the installed position in the turbomachine. In one embodiment, seal element assembly 64 is manufactured by a machining process, such as with lathes, mills, routers, grinders or other suitable machining process.

Once seal element assembly 64 has been removed, the next step, 102 of the process of FIG. 6, includes installing another seal element assembly 64 (FIG. 3) in turbomachine 2. Step 102 of installing another seal element 64 includes application of sufficient force to seal element assembly 64 to slidably move seat element assembly 64 relative to recess 62 until seal element assembly 64 has been installed in near flow path seal member 30 in turbomachine 2. Step 102 further includes deforming a portion of the mating features, as indicated by deformed region 78 (FIG. 3), in at least one of recess 62 and base 66 of seal element assembly 64 subsequent to installing seal element assembly 64.

While the invention has been described with reference to a preferred embodiment, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

Various aspects and embodiments of the present invention are defined by the following clauses:
1. A near flow path seal member comprising:
   a seal body having a first end portion extending to a second end portion having a dovetail member, the first end portion including a third end and
   a fourth end having a surface extending therebetween and facing away from the dovetail member, the surface having a longitudinal axis extending between the third end and the fourth end;
   a recess formed in the surface having a geometry to receive a seal element assembly having a base extending to at least one seal element;
   wherein the seal element assembly is selectively installable or removable from the recess.
2. The near flow path seal member of clause 1, wherein the seal element is composed of a first material and the seal body is composed of a second material that is different from the first material.
3. The near flow path seal member of clause 2, wherein the first material is composed of the group consisting of cobalt based alloys, non-weld-repairable alloys, including Rene'-108 (MAR M-247 or CM-247), Rene'-142, Rene'-N2, Rene'-N6, Rene'-195, GTD-444, GTD-111, PWA-1480, CMSX-4 having greater than about 30 percent by volume gamma prime particles in their microstructure, stainless steels, ceramic matrix composites ("CMCs"), coating materials overlying the first material and capable of preventing galling when placed in contact with the second material, and combinations thereof.
4. The near flow path seal member of clause 2, wherein the second material is composed of the group consisting of superalloys, non-weld-repairable alloys, including Rene'-108 (MAR M-247 or CM-247), Rene'-142, Rene'-N2, Rene'-N6, Rene'-195, GTD-444, GTD-111, PWA-1480, CMSX-4 having greater than about 30 percent by volume gamma prime particles in their microstructure, coating materials overlying the recess and capable of preventing galling when placed in contact with the first material, and combinations thereof.
5. The near flow path seal member of clause 1, the geometry is a slot including opposed ends having mating features permitting a slidable engagement/disengagement with the base of the seal element assembly.
6. The near flow path seal member of clause 5, wherein the slidable engagement includes deforming a portion of the mating features in at least one of the slot and the base of the seal element assembly subsequent to installing the seal element assembly.
7. The near flow path seal member of clause 5, wherein the slidable disengagement includes removal of a deformed portion of the mating features formed in at least one of the slot and the base of the seal element assembly subsequent to disengaging the seal element assembly.
8. The near flow path seal member of clause 7, wherein removal of the deformed portion is achieved by drilling or grinding.
9. The near flow path seal member of clause 5, wherein a direction of the slidable engagement/disengagement is substantially normal to the longitudinal axis.
10. The near flow path seal member of clause 1, wherein the slidable engagement/disengagement may be achieved without removing the near flow path seal member from an installed position in the turbomachine.
11. The near flow path seal member of clause 1, wherein the seal element assembly is manufactured by a machining process.
12. The near flow path seal member of clause 1, wherein the seal element has a thickness between about 0.07 inch and about 2.5 inch.
13. The near flow path seal member of clause 1, wherein the seal body is formed by molding.
14. A method of repairing a near flow path seal member in an installed position of a turbomachine, comprising:
   providing a seal body having a first end portion extending to a second end portion having a dovetail member, the first end portion including a third end and a fourth end defining a surface extending therebetween and
   facing away from the dovetail member, the surface having a longitudinal axis extending between the third end and the fourth end; a recess formed in the surface having a geometry to receive a seal element assembly having a base extending to at least one seal element; the seal element assembly having been previously installed;
   removing the seal element assembly; and
   installing another seal element assembly.
15. The method of clause 14, wherein removing the seal element assembly includes
   removing a deformed portion from mating features formed in at least one of the slot and the base of the seal element assembly.
16. The method of clause 15, wherein removing the deformed portion is achieved by drilling or grinding.
17. The method of clause 15, wherein subsequent to removing the deformed portion, removing the seal element assembly includes application of sufficient force to the seal element assembly to slidably move the seal element assembly relative to the recess.
18. The method of clause 17, wherein a direction of the slidable movement is substantially normal to the longitudinal axis.
19. The method of clause 14, wherein removing the seal element assembly is achieved without removing the near flow path seal member from the installed position in the turbomachine.
20. The method of clause 14, wherein the seal element assembly is manufactured by a machining process.

## Claims

1. A near flow path seal member (30) comprising:
a seal body (40) having a first end portion (42) extending to a second end portion (44) having a dovetail member (48), the first end portion (42) including a third end (54) and a fourth end (56) having a surface (58) extending therebetween and facing away from the dovetail member (48), the surface (58) having a longitudinal axis (60) extending between the third end (54) and the fourth end (56);
a recess (62) formed in the surface (58) having a geometry to receive a seal element assembly (64) having a base (66) extending to at least one seal element (68);
wherein the seal element assembly (64) is selectively installable or removable from the recess (62).

2. The near flow path seal member (30) of claim 1, wherein the seal element (68) is composed of a first material and the seal body is composed of a second material that is different from the first material.

3. The near flow path seal member (30) of claim 2, wherein the first material is composed of the group consisting of cobalt based alloys, non-weld-repairable alloys, including Rene'-108 (MAR M-247 or CM-247), Rene'-142, Rene'-N2, Rene'-N6, Rene'-195, GTD-444, GTD-111, PWA-1480, CMSX-4 having greater than about 30 percent by volume gamma prime particles in their microstructure, stainless steels, ceramic matrix composites ("CMCs"), coating materials overlying the first material and capable of preventing galling when placed in contact with the second material, and combinations thereof.

4. The near flow path seal member (30) of claim 2, wherein the second material is composed of the group consisting of superalloys, non-weld-repairable alloys, including Rene'-108 (MAR M-247 or CM-247), Rene'-142, Rene'-N2, Rene'-N6, Rene'-195, GTD-444, GTD-111, PWA-1480, CMSX-4 having greater than about 30 percent by volume gamma prime particles in their microstructure, coating materials overlying the recess (62) and capable of preventing galling when placed in contact with the first material, and combinations thereof.

5. The near flow path seal member (30) of claim 1, the geometry is a slot including opposed ends (70) having mating features permitting a slidable engagement/disengagement with the base (66) of the seal element assembly (64).

6. The near flow path seal member (30) of claim 5, wherein the slidable engagement includes deforming a portion of the mating features in at least one of the slot and the base (66) of the seal element assembly (64) subsequent to installing the seal element assembly (64).

7. The near flow path seal member (30) of claim 5, wherein the slidable disengagement includes removal of a deformed portion of the mating features formed in at least one of the slot and the base (66) of the seal element assembly (64) subsequent to disengaging the seal element assembly (64).

8. The near flow path seal member (30) of claim 7, wherein removal of the deformed portion is achieved by drilling or grinding.

9. The near flow path seal member (30) of claim 5, wherein a direction of the slidable engagement/disengagement is substantially normal to the longitudinal axis.

10. The near flow path seal member (30) of claim 1, wherein the slidable engagement/disengagement may be achieved without removing the near flow path seal member (30) from an installed position in the turbomachine (2).

11. The near flow path seal member (30) of claim 1, wherein the seal element assembly (64) is manufactured by a machining process.

12. The near flow path seal member (30) of claim 1, wherein the seal element (68) has a thickness between about 0.07 inch and about 2.5 inch.

13. The near flow path seal member (30) of claim 1, wherein the seal body is formed by molding.

14. A method of repairing a near flow path seal member (30) in an installed position of a turbomachine (2), comprising:
providing a seal body having a first end portion (42) extending to a second end portion (44) having a dovetail member (48), the first end portion (42) including a third end (54) and a fourth end (56) defining a surface (58) extending therebetween and facing away from the dovetail member (48), the surface (58) having a longitudinal axis extending between the third end (54) and the fourth end (56); a recess (62) formed in the surface (58) having a geometry to receive a seal element assembly (64) having a base (66) extending to at least one seal element (68); the seal element assembly (64) having been previously installed;
removing the seal element assembly (64); and
installing another seal element assembly (64).

15. The method of claim 14, wherein removing the seal element assembly (64) includes
removing a deformed portion from mating features formed in at least one of the slot and the base (66) of the seal element assembly (64).
